# EUROPEAN PATENT APPLICATION

(11) **EP 3 441 344 A1**
(43) Date of publication of application: **13.02.2019**
(21) Application number: 18188573.2
(22) Date of filing: 10.08.2018
(51) Int. Cl.: B66B 7/06

(54) **LOAD BEARING MEMBER FOR LIFTING SYSTEM**

(30) Priority: 11.08.2017 US 201762544049 P
(71) Applicant: Otis Elevator Company, Farmington, Connecticut 06032 (US)
(72) Inventor: ZHAO, Chen Qian, Farmington, CT 06032 (US)
(74) Representative: Dehns

(57) **Abstract**

A belt (16) for a lifting system includes a tension member (24) extending along a longitudinal length of the belt (16). The tension member (24) is formed from a layer of polyethylene material in tape or film form. A jacket (28) at least partially encloses the tension member (24). The jacket (28) defines a traction side of the belt (16) configured to interface with a traction sheave of a lifting system.

## Description

### BACKGROUND

Embodiments disclosed herein relate to lifting systems such as elevator systems, and more particularly to load bearing members to suspend and/or drive elevator cars of lifting systems.

Lifting systems, such as elevator systems are useful for carrying passengers, cargo, or both, between various levels in a building. Some elevators are traction based and utilize load bearing members such as belt, ropes or cables for supporting the elevator car and achieving the desired movement and positioning of the elevator car.

Some systems utilize metal ropes as load bearing member, but for high rise lifting such metal ropes are heavy and large in cross-section in related to their tensile strength and stiffness. Similarly, coated steel belts, which are typically steel cords enclosed in a jacket, are also at times too heavy for high rise elevator use, due to the steel cords. Carbon fiber belts, utilizing composite tension elements in the load bearing member will provide improved strength to weight advantages compared to steel cord belt. Such belts, however, require a relatively rigid thermoset matrix to protect fragile carbon fiber. The matrix material reduces flexibility of the belt requiring larger diameter sheaves to be utilized.

### BRIEF DESCRIPTION

In one embodiment, a belt for a lifting system includes a tension member extending along a longitudinal length of the belt. The tension member is formed from a layer of polyethylene material in tape or film form. A jacket at least partially encloses the tension member. The jacket defines a traction side of the belt configured to interface with a traction sheave of a lifting system.

Additionally, in this or other embodiments the tension member is formed from a polyethylene material formed by solid state extrusion and having a density of 0.78-0.97 g/cm³.

Additionally or alternatively, in this or other embodiments the tension member has a thickness in the range of 0.5 to 30 millimeters.

Additionally or alternatively, in this or other embodiments the tension member is a single unitary layer of polyethylene sheet, tape or film.

Additionally or alternatively, in this or other embodiments the tension member is formed from two or more layers of polyethylene material, having an adhesive layer disposed between adjacent layers of polyethylene material.

Additionally or alternatively, in this or other embodiments the tension member extends between 50% and 90% of a belt width.

Additionally or alternatively, in this or other embodiments the jacket is formed from one or more of a polyurethane, polyester, ethylene propylene diene elastomer, chloroprene or chlorosulfonyl polyethylene.

Additionally or alternatively, in this or other embodiments an adhesive layer is located between the tension member and the jacket.

Additionally or alternatively, in this or other embodiments the tension member is a plurality of tension members arrayed across a belt width, adjacent tension members of the plurality of tension members separated by a portion of the jacket.

In another embodiment, an elevator system includes a hoistway, an elevator car located in the hoistway and movable therein, and a belt operably connected to the elevator car to suspend and/or drive the elevator car along the hoistway. The belt includes a tension member extending along a longitudinal length of the belt. The tension member is formed from a layer of polyethylene material. A jacket at least partially encloses the tension member. The jacket defines a traction side of the belt configured to interface with a traction sheave of an elevator system.

Additionally, in this or other embodiments the tension member is formed from a polyethylene material formed by solid state extrusion and having a density of 0.78-0.97 g/cm³.

Additionally or alternatively, in this or other embodiments the tension member has a thickness in the range of 0.5 to 30 mil.

Additionally or alternatively, in this or other embodiments the tension member is a single unitary layer of polyethylene sheet, tape or film.

Additionally or alternatively, in this or other embodiments the tension member is formed from two or more layers of polyethylene material, having an adhesive layer disposed between adjacent layers of polyethylene material.

Additionally or alternatively, in this or other embodiments the tension member extends between 50% and 90% of a belt width.

Additionally or alternatively, in this or other embodiments the jacket is formed from one or more of a polyurethane, polyester, ethylene propylene diene elastomer, chloroprene or chlorosulfonyl polyethylene

Additionally or alternatively, in this or other embodiments an adhesive layer is located between the tension member and the jacket.

Additionally or alternatively, in this or other embodiments the tension member is a plurality of tension members arrayed across a belt width, adjacent tension members of the plurality of tension members separated by a portion of the jacket.

### BRIEF DESCRIPTION OF THE DRAWINGS

The following descriptions should not be considered limiting in any way. With reference to the accompanying drawings, like elements are numbered alike:
FIG. 1 is a schematic illustration of an embodiment of an elevator system;
FIG. 2 is cross-sectional view of an embodiment of a belt for an elevator system;
FIG. 3 is a cross-sectional view of another embodiment of a belt for an elevator system; and
FIG. 4 is a cross-sectional view of yet another embodiment of a belt for an elevator system.

### DETAILED DESCRIPTION

A detailed description of one or more embodiments of the disclosed apparatus and method are presented herein by way of exemplification and not limitation with reference to the Figures.

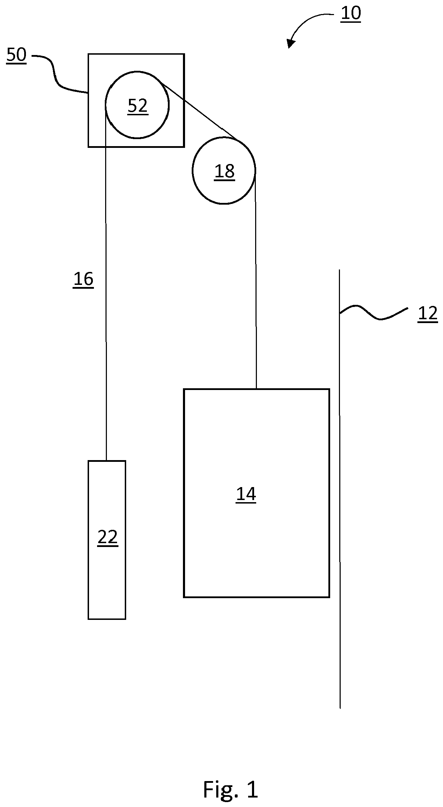

Shown in FIG. 1, is a schematic view of an exemplary traction elevator system 10. Features of the elevator system 10 that are not required for an understanding of the present invention (such as the guide rails, safeties, *etc*.) are not discussed herein. The elevator system 10 includes an elevator car 14 operatively suspended or supported in a hoistway 12 with one or more load bearing members, such as belts 16. It is to be appreciated that while the present description is in the context of belts 16 as load bearing members, the present disclosure may be applied to other load bearing members, such as cables or ropes. It is to be appreciated that while described herein in the context of elevator system 10, the present disclosure may be readily utilized in other lifting systems.

The one or more belts 16 interact with sheaves 18 and 52 to be routed around various components of the elevator system 10. Sheave 18 is configured as a diverter, deflector or idler sheave and sheave 52 is configured as a traction sheave 52, driven by a machine 50. Movement of the traction sheave 52 by the machine 50 drives, moves and/or propels (through traction) the one or more belts 16 that are routed around the traction sheave 52. Diverter, deflector or idler sheaves 18 are not driven by a machine 50, but help guide the one or more belts 16 around the various components of the elevator system 10.The one or more belts 16 could also be connected to a counterweight 22, which is used to help balance the elevator system 10 and reduce the difference in belt tension on both sides of the traction sheave during operation. The sheaves 18 and 52 each have a diameter, which may be the same or different from each other.

In some embodiments, the elevator system 10 could use two or more belts 16 for suspending and/or driving the elevator car 14 In addition, the elevator system 10 could have various configurations such that either both sides of the one or more belts 16 engage the sheaves 18, 52 or only one side of the one or more belts 16 engages the sheaves 18, 52. The embodiment of FIG 1 shows a 1:1 roping arrangement in which the one or more belts 16 terminate at the car 14 and counterweight 22, while other embodiments may utilize other roping arrangements.

The belts 16 are constructed to meet belt life requirements and have smooth operation, while being sufficiently strong to be capable of meeting strength requirements for suspending and/or driving the elevator car 14 and counterweight 22.

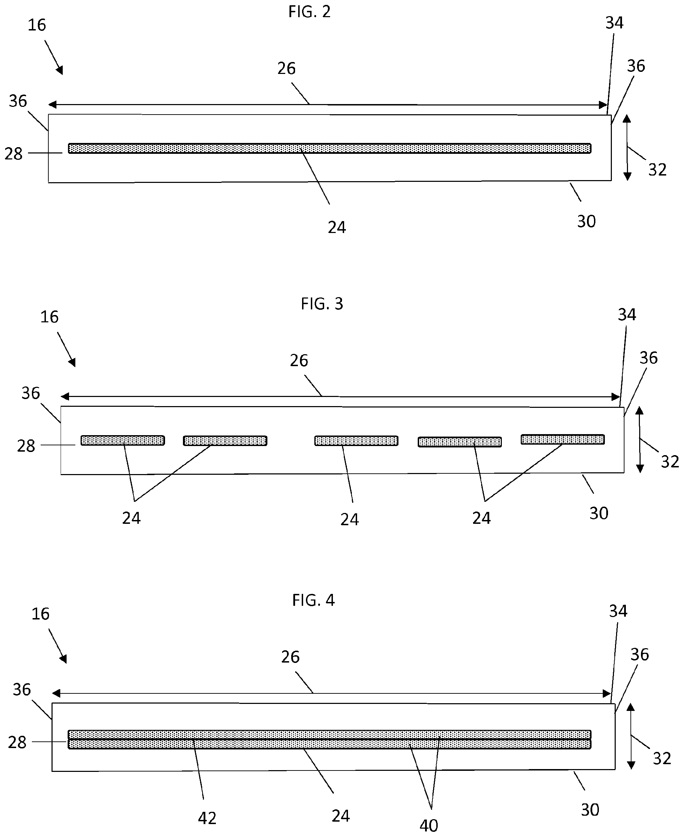

FIG. 2 provides a cross-sectional schematic of an exemplary belt 16 construction or design. The belt 16 includes a tension member 24 extending longitudinally along the belt 16 and across a width of the belt 16. The tension member 24 is at least partially enclosed in a jacket 28 to restrain movement of the tension member 24 in the belt 16 and to protect the tension member 24. The jacket 28 defines a traction side 30 configured to interact with a corresponding surface of the traction sheave 52. Exemplary materials for the jacket 28 include the elastomers of thermoplastic and thermosetting polyurethanes, polyamide, thermoplastic polyester elastomers, and rubber, for example. Other materials may be used to form the jacket 28 if they are adequate to meet the required functions of the belt 16. For example, a primary function of the jacket 28 is to provide a sufficient coefficient of friction between the belt 16 and the traction sheave 52 to produce a desired amount of traction therebetween. The jacket 28 should also transmit the traction loads to the tension members 24. In addition, the jacket 28 should be wear resistant and protect the tension members 24 from impact damage, exposure to environmental factors, such as chemicals, for example.

The belt 16 has a belt width 26 and a belt thickness 32, with an aspect ratio of belt width 26 to belt thickness 32 greater than one. The belt 16 further includes a back side 34 opposite the traction side 30 and belt edges 36 extending between the traction side 30 and the back side 34.

The tension member 24 is formed from a layer of high modulus material is sheet, film or tape form with thickness at the range from 0.5-30 mil, such as ultra-high molecular weight polyethylene (UHMWPE). In other embodiments, other ultra-high molecular weight polyolefin polymer may be utilized.. In some embodiments, the tension member 24 extends substantially across the belt width 26, and in some embodiments extends between 50 percent and 90 percent across the belt width 26. In some embodiments, the UHMWPE is produced by solid state extrusion. The UHMWPE has a high strength and a high toughness, low elongation, high dimension stability, an outstanding abrasion resistance, a low density, a high chemical resistance. Compared to carbon fiber, the UHMWPE has a density of 0.78-0.97 g/cm³ compared to 1.8 g/cm³ for carbon fiber. Highly oriented UHMWPE tape or film produced by solid state extrusion is considered better mechanical performance than a gel-spun fiber. Tapes or films are well fused together with melted and recrystallized materials between, with the recrystallized lamellae. Jacket materials such as polyurethanes, polyesters, ethylene propylene diene elastomer, chloroprene, chlorosulfonyl polyethylene etc. could be easily coated onto UHMWPE tape or film. In some embodiments, an adhesive layer 38 may be positioned between the tension member 24 and the jacket 28 to improve adhesion therebetween. The jacket 28 may further includes a wax, UV stabilizer, fire retardant material or other additives to meet performance requirements of the elevator system.

Referring now to FIG. 3, in other embodiments the belt 16 may include a plurality of tension members 24 formed from sheet, film or tape, with each tension member 24 extending partially across the belt width 26, with a portion of the jacket 28 positioned between adjacent tension members 24 to retain the tension members 24 in desired lateral positions.

Referring now to FIG. 4, while in the embodiments of FIGs. 2 and 3 the tension member 24 is a single layer of sheet, film or tape, in some embodiments multiple film layers 40 may be utilized to form tension member 24. In such embodiments, a tension member adhesive layer 42 may be placed between the adjacent film layers 40 to restrict independent relative movement of the film layers 40.

The belt 16 as described herein provides several benefits including elimination of the thermoset matrix utilized in carbon fiber belts thereby improving belt flexibility. This improved flexibility allows for the use of smaller diameter sheaves thereby saving space in the elevator system. The tension member 24 has a lower density, with a greater specific strength than other tension members and results in a lighter weight belt 16, which is especially beneficial in high lift and ultra-high lift elevator systems 10. Further the film layers 40 are cut resistant and abrasion resistant, potentially improving their service life.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A belt for a lifting system, comprising:
a tension member extending along a longitudinal length of the belt, the tension member formed from a layer of polyethylene material in tape or film form; and
a jacket at least partially enclosing the tension member, the jacket defining a traction side of the belt configured to interface with a traction sheave of a lifting system.

2. The belt of claim 1, wherein the tension member is formed from a polyethylene material formed by solid state extrusion and having a density of 0.78-0.97 g/cm³.

3. The belt of claim 1 or 2, wherein the tension member has a thickness in the range of 0.5 to 30 millimeters.

4. The belt of any preceding claim, wherein the tension member is a single unitary layer of polyethylene sheet, tape or film.

5. The belt of any of claims 1-3, wherein the tension member is formed from two or more layers of polyethylene material, having an adhesive layer disposed between adjacent layers of polyethylene material.

6. The belt of any preceding claim, wherein the tension member extends between 50% and 90% of a belt width.

7. The belt of any preceding claim, wherein the jacket is formed from one or more of a polyurethane, polyester, ethylene propylene diene elastomer, chloroprene or chlorosulfonyl polyethylene.

8. The belt of any preceding claim, further comprising an adhesive layer disposed between the tension member and the jacket.

9. The belt of any preceding claim, wherein the tension member is a plurality of tension members arrayed across a belt width, adjacent tension members of the plurality of tension members separated by a portion of the jacket.

10. An elevator system, comprising:
a hoistway;
an elevator car disposed in the hoistway and movable therein;
a belt operably connected to the elevator car to suspend and/or drive the elevator car along the hoistway, the belt including:
a tension member extending along a longitudinal length of the belt, the tension member formed from a layer of polyethylene material; and
a jacket at least partially enclosing the tension member, the jacket defining a traction side of the belt configured to interface with a traction sheave of an elevator system.

11. The elevator system of claim 10, wherein the tension member is formed from a polyethylene material formed by solid state extrusion and having a density of 0.78-0.97 g/cm³.

12. The elevator system of claim 10 or 11, wherein the tension member has a thickness in the range of 0.5 to 30 mil.

13. The elevator system of claim 10, 11 or 12, wherein the tension member is a single unitary layer of polyethylene sheet, tape or film, or
wherein the tension member is formed from two or more layers of polyethylene material, having an adhesive layer disposed between adjacent layers of polyethylene material.

14. The elevator system of any of claims 10-13, wherein the tension member extends between 50% and 90% of a belt width; and/or
wherein the jacket is formed from one or more of a polyurethane, polyester, ethylene propylene diene elastomer, chloroprene or chlorosulfonyl polyethylene; and/or
wherein the tension member is a plurality of tension members arrayed across a belt width, adjacent tension members of the plurality of tension members separated by a portion of the jacket.

15. The elevator system of any of claims 10-14, further comprising an adhesive layer disposed between the tension member and the jacket.
